# EUROPÄISCHE PATENTANMELDUNG

(11) **EP 2 372 191 A2**
(43) Veröffentlichungstag der Anmeldung: **05.10.2011**
(21) Anmeldenummer: 11171744.3
(22) Anmeldetag: 24.09.2008
(51) Int. Cl.: F16H 48/10, F16H 48/26

(54) **Differentialgetriebe mit leichten Trägerteilen und Visco-Kupplung**

(30) Priorität: 20.10.2007 DE 102007050205
(62) Teilanmeldung aus: 08804664.4
(71) Anmelder: Schaeffler Technologies GmbH & Co. KG, 91074 Herzogenaurach (DE)
(72) Erfinder: Schmitt, Günter, 91353 Hausen (DE)

(57) **Zusammenfassung**

Die Erfindung betrifft ein Differentialgetriebe (100) mit einer Summenwelle (10) für die Verteilung von Drehmomenten an ein erstes Differenzglied (40) sowie an ein zweites Differenzglied (42) über mindestens ein aus jeweils einem ersten Planetenrad (50) und einem zweiten Planetenrad (52) gebildetes Paar, wobei die Planetenräder (50, 52) eines Paares sich so einander gegenüberliegen und wirkverbunden sind, dass axial mittlere Teilabschnitte (54, 56) der verzahnten Abschnitte beider Planetenräder (50, 52) miteinander verzahnt sind, dass jeder der mittleren Teilabschnitte (54, 56) jeweils axial neben einem verzahnten äußeren Teilabschnitt (55, 57) des jeweiligen Planetenrads (50, 52) ausgebildet ist, und dass der äußere Teilabschnitt (55) des ersten Planetenrades (50) im Zahneingriff mit einer ersten Verzahnung (41) an dem ersten Differenzglied (40) und der äußeren Teilabschnitt (57) des zweiten Planetenrades (52) im Zahneingriff mit einer zweiten Verzahnung (43) an dem zweiten Differenzglied (42) steht, und ist dadurch gekennzeichnet, dass die Summenwelle (10) ein axial symmetrisches Stirnrad (20) und ein erstes (30) Trägerteil umfasst, wobei die Planetenräder (50, 52) in dem ersten Trägerteil (30) und in dem Stirnrad (20) gelagert sind

## Beschreibung

Die Erfindung betrifft einer Differentialgetriebe mit einer Summenwelle für die Verteilung von Drehmomenten an ein erstes Differenzglied sowie an ein zweites Differenzglied über mindestens ein aus jeweils einem ersten Planetenrad und einem zweiten Planetenrad gebildetes Paar, wobei die Planetenräder eines Paares sich so einander gegenüberliegen und wirkverbunden sind, dass axial mittlere Teilabschnitte der verzahnten Abschnitte beider Planetenräder miteinander verzahnt sind, dass jeder der mittleren Teilabschnitte jeweils axial neben einem verzahnten äußeren Teilabschnitt des jeweiligen Planetenrads ausgebildet ist, und dass der äußere Teilabschnitt des ersten Planetenrades im Zahneingriff mit einer ersten Verzahnung an dem ersten Differenzglied und der äußeren Teilabschnitt des zweiten Planetenrades im Zahneingriff mit einer zweiten Verzahnung an dem zweiten Differenzglied steht.

### Hintergrund der Erfindung

Die Druckschrift EP 0 918 177 A1 zeigt ein Stirnraddifferential des Standes der Technik. Das Stirnraddifferential weist ein Antriebsrad auf, das durch ein Tellerrad gebildet ist aber auch als Stirnrad vorzugsweise mit Schrägverzahnung ausgeführt sein kann. Das Antriebsrad ist zusammen mit einem Planetenträger um die Drehachse drehbar und dazu an dem Planetenträger befestigt. Das Antriebsrad, das Gehäuse mit Planetenträger und die Abtriebsräder des Stirnraddifferentials weisen gemeinsam die Drehachse auf. Über das Antriebsrad werden Drehmomente in das Stirnraddifferential zum Planetenträger geleitet.

Der Planetenträger beziehungsweise das Gehäuse als Planetenträger ist die so genannte Summenwelle des Differentials. Die Summenwelle ist das Glied, das jeweils die größten Drehmomente führt. Die Abtriebswellen sind mit den Abtriebsrädern drehfest gekoppelt und sind die sogenannten Differenzwellen. Die Differenzwellen geben jeweils einen Differenzbetrag der in das Differential eingeleiteten Drehmomente beispielsweise an das angetriebene Fahrzeugrad weiter. In dem Stand der Technik ist der Planetenträger beziehungsweise das Gehäuse als Planetenträger die Summenwelle 50 des Planetentriebs.

Im Stand der Technik sind entweder Hohlräder oder Sonnenräder als Abtriebsräder den Differenzwellen gleichgesetzt, da diese jeweils drehfest mit den Abtriebswellen verbunden beziehungsweise über weitere Übertragungsglieder mit diesen gekoppelt sind. Die Abtriebsräder werden deshalb im Folgenden auch als Differenzglieder bezeichnet.

Nach der Druckschrift EP 0 918 177 A1 ist das Ausgleichsgehäuse mit dem Planetenträger drehfest verbunden. Die auch als Lagerzapfen bezeichneten Planetenbolzen sind mittig ihrer Länge an dem Planetenträger nur einmal gelagert.·Sie stehen beidseitig aus dem Planetenträger in das Ausgleichsgehäuse hervor und sind in an diesem drehbar gelagert. An den hervorstehenden Abschnitten der Planetenbolzen sind beidseitig des Planetenträgers Planetenräder fest ausgebildet oder mit dem jeweiligen Planetenbolzen fest verbunden.

Ein weiteres Stirnraddifferential ist in einem Fachaufsatz der ATZ 01/2006, "Kompaktes Achsgetriebe für Fahrzeuge mit Frontantrieb und quer eingebautem Motor", der Autoren Höhn, Michaelis und Heizenröther beschrieben.

Bei diesem Differentialgetriebe ist jeweils ein Planetenrad um die jeweilige Bolzenachse auf einem Abschnitt der Planetenbolzen drehbar gelagert. Die Planetenbolzen sind in diesem Fall drehfest zu dem Planetenträger. Die Planetenräder mit Planetenbolzen sind jeweils auf einer kreisringförmigen Umlaufbahn um die Drehachse angeordnet.

Die Abtriebsräder können Hohlräder mit Innenverzahnung sein, von denen jedes drehfest mit einer Abtriebswelle gekoppelt ist. Die Abtriebswellen stehen jeweils zumeist mit einem getriebenen Fahrzeugrad in einer Wirkverbindung.

Jedes der Planetenräder ist mit einem anderen der Planetenräder zu einem gegenseitigen Zahneingriff gepaart. Außerdem kämmen die mit Planetenräder einer Seite mit einem ersten Hohlrad und alle Planetenräder der anderen Seite mit einem zweiten Hohlrad. Das Drehmoment wird über die Planetenräder an die Hohlräder und somit an die Abtriebswellen verteilt sowie von dort an die angetriebenen Fahrzeugräder weitergegeben.

Die Planetenräder eines Paares stehen in diesem Differential mit der in Längsrichtung halben Zahnbreite jeweils miteinander im Eingriff. Die in Längsrichtung äußere Hälfte der Zahnbreite eines jeden Zahnrads einer Paarung kämmt mit jeweils einem der innenverzahnten Hohlräder. Die Längsrichtung ist die Richtung, in die Drehachse des Differentials gerichtet ist.

Um den zuvor beschriebenen Zahneingriff zu ermöglichen, ist der Planetenträger aus Blech im Bereich der jeweiligen Planetenradpaarung wechselseitig in Längsrichtung durchgestellt und in radialer Richtung der Planetenräder durchbrochen, so dass der Planetenrädern einer Paarung in etwa längs mittig des Differentials miteinander kämmen.

Ein Kriterium für die Beurteilung der Funktionsgenauigkeit eines Planetentriebes ist die Genauigkeit des Zahneingriffs der miteinander kämmenden Planetenpaarung, Planeten - Sonne und Planeten - Hohlrad. Die Genauigkeit des Zahneingriffs wiederum ist über die üblichen Fertigungstoleranzen hinaus von Verlagerungen und Verformungen abhängig, die während des Betriebs des Stirnraddifferentials auftreten. Mittig und generell auch seitlich nur einmal aufgenommene Planetenbolzen sind insbesondere bei hoch belasteten Differentialen anfällig gegen Durchbiegung und, daraus folgend, die auf dem Bolzen sitzenden Planetenräder sind anfällig gegen Verkippungen. Die Folgen können unzulässige Geräusche, ungenauer Zahneingriff und vorzeitiger Verschleiß sein. Auch deshalb kommen Differentiale des Standes der Technik vorzugsweise in Fahrzeugen zur Anwendung, in denen relativ geringe Drehmomente übertragen werden müssen.

Der Vorteil des Stirnraddifferentials des Standes der Technik liegt in seiner leichten Bauweise aus Blech. Die Leichtbauweise mit Blech ist insbesondere, wie in dem Fachaufsatz beschrieben ist, für den Planetenträger sinnvoll. Die Durchstellungen der Lagerstellen und Durchbrüche für den Zahneingriff lassen sich einfach durch Ziehen oder Prägen und Stanzen ins Blech einbringen.

Nachteilig kann sich jedoch das dünne Blech auf das anfangs erwähnte Verformungsverhalten des Planetenträgers auswirken, insbesondere weil das Blech des Planetenträgers zusätzlich durch die Durchbrüche geschwächt ist. Demzufolge kann es auch wiederum nachteilig sein, wenn der Berührradius zu groß ist. Der Einsatz von dickerem Blech zur Kompensationen der Verformungsanfälligkeit würde in einem solchen Fall die Vorteile des Leichtbaudifferentials zumindest teilweise zunichte machen.

Der Bauraum, der derartigen Differentialen am Fahrzeug zur Verfügung steht, ist in der Regel gering, so dass die Differentiale relativ kleine äußeren Abmessungen aufweisen sollen. Die Fähigkeit Drehmomente zu übertragen wird dagegen, wie auch in der Druckschrift EP 0 918 177 A1 beschrieben ist, außer von den Kriterien Zahnbreite, Geometrie und weiteren im wesentlichen von dem mittleren Berührradius bestimmt. Je größer der Berührradius ist, um so höher ist, vorbehaltlich des anfangs erwähnten Einflusses aus der Verformungsanfälligkeit, der Betrag übertragbaren Momente.

Auch wenn das in der Druckschrift EP 0 918 177 A1 beschriebene Stirnraddifferential, dessen Planeten in Hohlräder eingreifen, aufgrund des außen liegenden Zahneingriffs zwischen Planeten und Abtrieb und damit hinsichtlich seiner Kapazität Drehmomente zu übertragen gegenüber einem abmessungsgleichen klassischen Kegelraddifferential beziehungsweise gegenüber Differentialgetrieben mit Sonnrädern als Differenzgliedern an sich im Vorteil ist, ist es nach wie vor Ziel, die Differentiale so leicht und klein wie möglich und sehr hoch belastbar zu gestalten.

Wie bereits erwähnt, ist auch die Zahnbreite ein Kriterium für die Höhe des übertragbaren Drehmoments. Je breiter der Zahneingriff ist, um so höhere Momente können übertragen werden. Durch breiter gestalteten Zahneingriff, benötigen die Differentiale längs, also axial, mehr Bauraum und werden somit insgesamt schwerer und teurer.

In den zuvor beschriebenen Differentialgetrieben kämmen die Planetenräder eines Paares miteinander. Gleichzeitig steht jedes der Planetenräder eines Paares im verzahnenden Eingriff mit einem anderen Differenzglied als das andere Planetenrad der Paarung. Wenn in diesem Differential eins oder beide Planetenräder mit beiden Differenzgliedern (beispielsweise zugleich mit beiden Sonnenrädern) im Eingriff stehen würde, wäre der Ausgleich im Differential blockiert. Bei der Auslegung des Planetentriebes ist deshalb ausreichend Freiraum für die Verzahnung jeder der beiden Differenzglieder für sich gegenüber demjenigen Planetenrad vorzusehen, mit dem die Verzahnung dem jeweiligen Differenzglied nicht im Eingriff stehen darf. In dem Differential nach der Druckschrift EP 09 918 177 A1 ist dafür ausreichend axialer Bauraum zwischen den Zahneingriff zur jeweiligen Sonne vorgesehen, indem das Planetenrad um den Betrag des axial benötigten Bauraums länger ist. Eine derartige Anordnung erfordert durch das axial längere Planetenrad zusätzlichen axialen Bauraum. Dadurch wird das gesamte Differentialgetriebe jedoch schwerer und nimmt ein großen Bauraum ein.

Die Bolzenachsen der Planetenbolzen eines Paares liegen umfangsseitig hintereinander. Wie viele Paare der Planetenräder umfangseitig angeordneten werden können, hängt von dem umfangsseitigen Abstand ab, der durch die Abmessungen der Planetenräder vorgegeben ist und der auch maßgeblich von der Gestaltung der Lagerstellen für die Planetenräder und von deren Umgebungskonstruktion abhängig ist.

Das in der Druckschrift EP 0 918 177 A1 beschriebene Differential und das dazugehörige im vorgenannten Fachaufsatz umgesetzten Praxisbeispiel weisen jeweils drei symmetrisch am Umfang verteilte Paare Planetenräder auf - es wird jedoch in der Druckschrift EP 0 918 177 A1 darauf verwiesen, dass bei höheren durch das Differential zu übertragenden Momenten mehr als drei Paare eingesetzt werden können. Sowohl der Einsatz von mehr als drei Paaren als auch die Übertragung von hohen Drehmomenten ist hinsichtlich des zur Verfügung stehenden Bauraums in den Anordnungen beider Ausführungen des Standes der Technik nach der Druckschrift EP 0 918 177 A1 schwierig. Hinzu kommen für die Leichtbaudifferentiale aus Blech die zuvor beschriebenen durch Verformungen bestimmten Belastungsgrenzen des mittig angeordneten Planetenträgers aus Blech. Sollen derartige Differentiale für höhere Belastungen ausgelegt werden, wird entsprechend mehr Bauraum benötigt. Das Differential wird schwerer und teurer. Deshalb sind diese Typen des Standes der Technik vorzugsweise in Differentialen eingesetzt, mit denen relativ geringe Drehmomente übertragen werden müssen.

Im Stand der Technik sind werden des weiteren sogenannte Visco-Kupplungen bekannt, die zwischen die Abtriebswelle und das anzutreibende Rad gekoppelt sind und die auftretende Differenz dämpfen.

Die Druckschrift US 2005/0159264 A1 zeigt den Einsatz solcher Visco-Kupplungen in einem Kraftfahrzeug.

Solche Kupplungen benötigen jedoch zusätzlichen Bauraum, der nicht in jedem Anwendungsfall bereitgestellt werden kann.

### Aufgabe der Erfindung

Der Erfindung liegt daher die Aufgabe zugrunde, ein Differentialgetriebe bereitzustellen, das hohe Drehmomente aufnehmen kann, um es zumindest in Klein-und Mittelklassewagen einzusetzen, und das bei geringem Bauraum nur ein geringes Gewicht aufweist und in das einfach und platzsparend mit einer Visco-Kupplung kombinierbar ist.

### Zusammenfassung der Erfindung

Diese Aufgabe wird durch ein Differentialgetriebe mit einer Summenwelle für die Verteilung von Drehmomenten an ein erstes Differenzglied sowie an ein zweites Differenzglied über mindestens ein aus jeweils einem ersten Planetenrad und einem zweiten Planetenrad gebildetes Paar gelöst, wobei die Planetenräder eines Paares sich so einander gegenüberliegen und wirkverbunden sind, dass axial mittlere Teilabschnitte der verzahnten Abschnitte beider Planetenräder miteinander verzahnt sind, dass jeder der mittleren Teilabschnitte jeweils axial neben einem verzahnten äußeren Teilabschnitt des jeweiligen Planetenrads ausgebildet ist, und dass der äußere Teilabschnitt des ersten Planetenrades im Zahneingriff mit einer ersten Verzahnung an dem ersten Differenzglied und der äußeren Teilabschnitt des zweiten Planetenrades im Zahneingriff mit einer zweiten Verzahnung an dem zweiten Differenzglied steht, und ist dadurch gekennzeichnet, dass die Summenwelle ein axial symmetrisches Stirnrad und ein erstes Trägerteil umfasst, wobei die Planetenräder in dem ersten Trägerteil und in dem Stirnrad gelagert sind.

Vorzugsweise kann des weiteren vorgesehen sein, dass das erste Trägerteil ein kaltumgeformtes, an das Stirnrad angeflanschtes Blechteil ist.

Insbesondere kann sich das zweite Differenzglied durch eine zentrale Aussparung in dem Stirnrad erstrecken. Auf diese Weise kann besonders einfach eine Momentenübertragung auf die den Planetenrädern abgewandte Seite des Stirnrades bereitgestellt werden.

In einer bevorzugten Ausführungsform ist das zweite Differenzglied mit einer Visco-Kupplung gekoppelt ist.

In einer Ausführungsform kann Visco-Kupplung die an einer den Planetenrädern abgewandten Seite des Stirnrads angeordnet sein.

Vorzugsweise ist die Visco-Kupplung ist in einem zweiten Trägerteil gelagert.

Die vorgeschlagene Lösung vermeidet ein separates Ausgleichsgetriebe mit massivem Differentialkorb bzw. massiven Trägerteilen. Grundsätzlich wird vorgeschlagen, lediglich eine massive Komponente vorzusehen. Da auf das massive Stirnrad der Summenwelle nicht verzichtet werden kann, wird das Stirnrad als starre, massiv gefertigte Trägerkomponente genutzt. Die Aufgaben des Differentialkorbs und des Außenlamellenträgers der Visco-Kupplung werden durch zwei anzuflanschende Ziehteile kostengünstig und gewichtssparend gelöst. Kostenaufwendige spanende Bearbeitungstechnologien werden für die Trägerteile vermieden. Trotzdem ist das Differentialgetriebe aufgrund der Lagerung der Planetenräder in dem ersten Trägerteile und dem massiven Stirnrad dazu in der Lage, große Momente zu übertragen.

Des weiteren kann ein Deckel die Visco-Kupplung in dem zweiten Trägerteil einschließen und der Deckel zusammen mit dem zweiten Trägerteil an das Stirnrad geflanscht sein. Auf diese Weise wird die Visco-Kupplung besonders platzsparend in das Differentialgetriebe integriert, wobei die Lagerung in dem Differentialgetriebe eine hohe Momentenübertragung auch durch die Visco-Kupplung hindurch ermöglicht.

Vorzugsweise ist das zweite Trägerteil und/oder der Deckel als kaltumgeformtes Blechteil hergestellt ist.

Insbesondere kann vorgesehen sein, dass die erste Verzahnung und die zweite Verzahnung jeweils als Außenverzahnung ausgebildet sind.

In einer Ausführungsform weisen das Stirnrad und das erste und das zweite Trägerteil und der Deckel jeweils einer Anzahl rotationssymmetrisch angeordneter Durchgangsbohrungen auf, durch die Befestigungselemente zum Verbinden des Stirnrads mit dem ersten und dem zweiten Trägerteil und dem Deckel geführt sind.

Auf diese Weise wird ein sichere und belastbare Verbindung der Summenwelle sichergestellt. Als Befestigungselemente können bspw. Schrauben oder Bolzen verwendet werden.

Es kann vorgesehen sein, dass das ein erstes Ende des ersten Differenzgliedes in dem ersten Trägerteil und ein erstes Ende des zweiten Differenzgliedes in dem Stirnrad geführt ist.

Vorzugsweise weist das Stirnrad einen Doppel-T-förmigen Querschnitt auf. Des weiteren können die Planetenräder identisch zueinander ausgebildet sein. In einer bevorzugten Ausführungsform sind die Trägerteile und der Deckel als Zieh-Präge-Teile hergestellt.

Eine Ausführungsform der Erfindung ist dadurch gekennzeichnet, dass jeder der mittleren Teilabschnitte jeweils axial zwischen dem verzahnten äußeren Teilabschnitt des jeweiligen Planetenrads und einem nicht verzahnten Abschnitt ausgebildet ist, und dass einem ersten, nicht verzahnten Abschnitt des ersten Planetenrads umfangsseitig ein zweiter, axial äußerer Teilabschnitt eines an dem zweiten Planetenrad ausgebildeten zweiten verzahnten Abschnitts berührungslos gegenüberliegt, und einem zweiten, nicht verzahnten Abschnitt des zweiten Planetenrads umfangsseitig ein erster, axial äußerer Teilabschnitt eines an dem ersten Planetenrad ausgebildeten ersten verzahnten Abschnitts berührungslos gegenüberliegt

Dabei kann vorgesehen sein, dass sich die zweite Verzahnung des ersten Differenzgliedes dem ersten, nicht verzahnten Abschnitt des ersten Planetenrad radial und berührungslos gegenüberliegen.

Des weiteren kann die erste Verzahnung dem zweiten, nicht verzahnten Abschnitt des zweiten Planetenrads radial und berührungslos gegenüberliegt.

Die nicht verzahnten Abschnitte können außenzylindrisch ausgebildet sein.

Insbesondere ist der Außendurchmesser der nicht verzahnten Abschnitte kleiner ist als der Fußkreisdurchmesser der verzahnten Abschnitte, wobei an dem Fußkreisdurchmesser der Zahnfuß jedes der Zähne des verzahnten Abschnitts aus dem Planetenrad hervorgeht.

Weitere Vorteile und Ausgestaltungen der Erfindung ergeben sich aus der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

### Kurze Beschreibung der Zeichnungen

Die Erfindung wird nachfolgend anhand von Ausführungsbeispielen näher erläutert. In der dazugehörigen Zeichnung zeigt dabei:
- Figur 1: eine Seitenansicht eines erfindungsgemäßen Differentialgetriebes,
- Figur 2: eine Querschnittsansicht des erfindungsgemäßen Differentialgetriebes in Figur 1,
- Figur 3: eine Explosionsansicht eines Ausgleichsgetriebes eines erfindungsgemäßen Differentialgetriebes,
- Figur 4: verschiedene Ansichten des Ausgleichsgetriebes in Figur 3,
- Figur 5: eine Visco-Kupplung eines erfindungsgemäßen Differentialgetriebes
- Figur 6: verschiedene Ansichten der Visco-Kupplung in Figur 5,
- Figur 7: die Baugruppen einer ersten Ausführungsform eines erfindungsgemäßen Differentialgetriebes in einer Explosionsansicht,
- Figur 8: die Baugruppen einer zweiten Ausführungsform eines erfindungsgemäßen Differentialgetriebes in einer Explosionsansicht,
- Figur 9: den Aufbau der Planetenräder eines erfindungsgemäßen Differentialgetriebes.

### Ausführliche Beschreibung der Zeichnungen

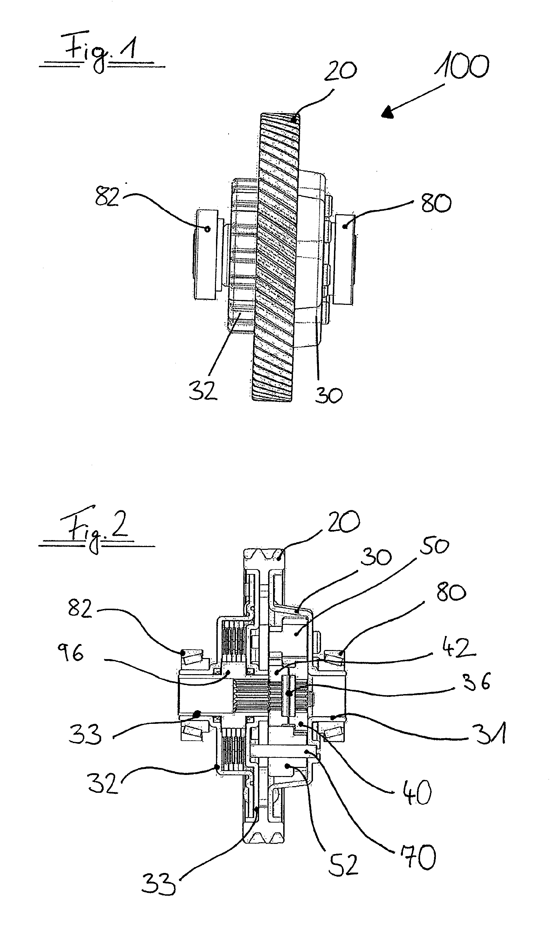

Figur 1 zeigt eine Seitenansicht eines erfindungsgemäßen Differentialgetriebes 100. Das Differentialgetriebe 100 ist als selbstsperrendes Stirnradausgleichsdifferentialgetreibe ausgelegt, dessen grundsätzliches Funktionsprinzip dem Fachmann aus dem Stand der Technik bekannt ist, und das im Detail daher nicht erneut erläutert wird.

Antriebsseitig weist das erfindungsgemäße Differentialgetriebe 100 ein Stirnrad 20 auf, das eine Schrägverzahnung umfasst. Über das Stirnrad 20 wird das auf die Räder zu verteilende Antriebsmoment des Motors in das Differentialgetriebe 100 eingeleitet.

An das Stirnrad 20 ist zum einen ein erstes Trägerelement 30 angeflanscht, das zur Lagerung und Führung eines Ausgleichsgetriebes 120 und eines ersten Differenzgliedes 40 vorgesehen ist.

Auf der dem ersten Trägerelement 30 entgegengesetzten Seite des Stirnrads 20 ist ein zweites Trägerelement 32 angeflanscht, das als Außenlamellenträger einer Visco-Kupplung 90 und zur Führung eines zweiten Differenzgliedes 42 vorgesehen ist.

Das Differentialgetriebe 100 ist mittels zweier Lager 80, 82 gelagert.

Figur 2 zeigt eine Querschnittsansicht des Differentialgetriebes 100 in Figur 1.

In dem ersten Trägerteil 30 sind Planetenräder 50, 52 angeordnet, wobei insgesamt drei Paare von Planetenrädern 50, 52 vorgesehen sind und ein erstes Planetenrad 50 jedes Paares von Planetenrädern 50, 52 mit einem ersten Differenzglied 40 in kämmendem Eingriff steht und ein zweites Planetenrad 52 jedes Paars von Planetenrädern 50, 52 mit einem zweiten Differenzglied 42 in kämmenden Eingriff steht. Des weiteren sind die Planetenräder 50, 52 jedes Paares auch miteinander in kämmenden Eingriff befindlich.

Die Planetenräder 50, 52 und die Differenzglieder 40, 42 sind innerhalb des ersten Trägerelements 30 angeordnet. Die Planetenräder 50, 52 sind dabei jeweils auf Planetenbolzen 70 gelagert, die wiederum mit einem Ende in dem ersten Trägerteil 30 und mit einem entgegengesetzten Ende in dem Stirnrad 20 gelagert sind. Auf diese Weise ist eine höhere Belastung der Planetenräder 50, 52 möglich als dies bei einer fliegenden Lagerung möglich wäre.

Das erste Differenzglied 40 ist als Sonnenrad mit Außenverzahnung ausgebildet und weist in einer zentralen Aussparung eine Innenverzahnung auf, über die es mit einer ersten Antriebswelle (nicht dargestellt) verbunden werden kann. In einer alternativen Ausführungsform kann vorgesehen sein, dass sich das erste Differenzglied 40 in einen topfförmigen Abschnitt 31 des ersten Trägerelements 30 erstreckt, um zusätzlich in diesem geführt zu werden.

Das zweite Differenzglied 42 weist eine zweite Zahnung 43 auf, die ebenfalls als Außenverzahnung ausgebildet ist und in kämmendem Eingriff mit den Planetenrädern 52 steht. Auch das zweite Differenzglied 42 weist des weiteren in einer zentralen Aussparung eine Innenverzahnung auf, über die es mit einer Welle 96 der Visco-Kupplung 90 in Steckverbindung steht.

Die Innenverzahnung des ersten Differenzgliedes 40 und des zweiten Differenzgliedes 42 wird durch ein Deckelelement 36 abgeschlossen, das ein zu weites Einführen der Steckverbindungselemente verhindert.

Das zweite Trägerelement 32 dient als Gehäuse und Außenlamellenträger einer Visco-Kupplung 90. Auch das zweite Trägerelement 32 weist einen topfförmigen Abschnitt 33 auf, in dem die Welle 96 der Visco-Kupplung zusätzlich geführt ist.

Das erste Trägerteil 30 und das zweite Trägerteil 32 sind dabei kostengünstig als Stanzumformteile hergestellt. Über Berechnungsprogramme können anwendungsbedingt die notwendigen Wanddicken und Verstrebungen gewichtssparend berechnet und definiert werden.

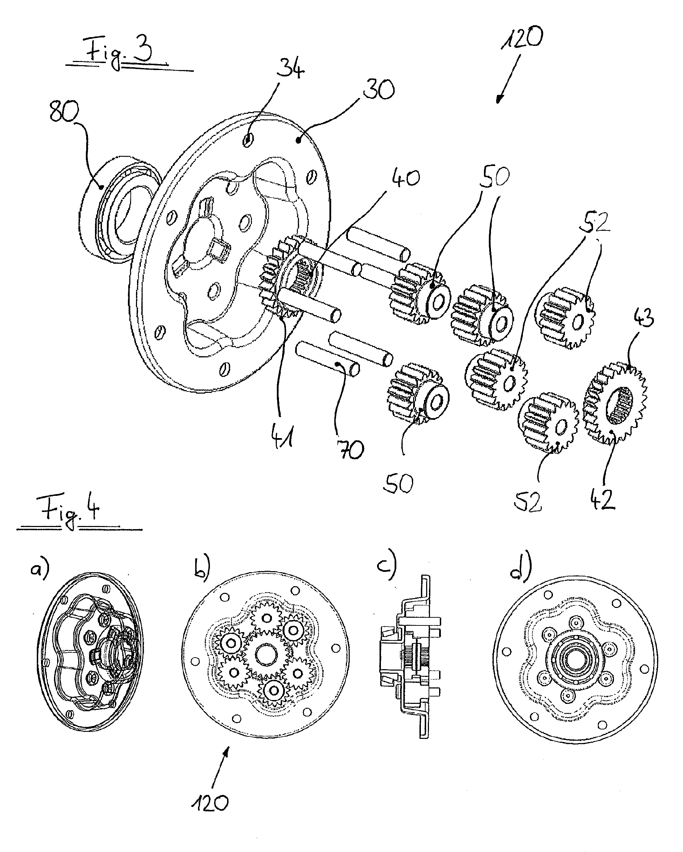

Die Figuren 3 und 4 zeigen das Ausgleichsgetriebe 120, das im Folgenden figurenübergreifend beschrieben wird.

Das Trägerteil 30 lagert die Planetenbolzen 70 zum einen auf einer Seite und dient zum anderen gleichzeitig als Gehäuse des Ausgleichsgetriebes 120. Das erste Trägerteil 30 ist mittels eines Lagers 80 gelagert, bei dem es sich bspw. um ein übliches Radiallager, wie etwa ein Zylinder-, Tonnen- oder Kugellager oder Kombinationen hiervon handeln kann.

Das erste Trägerteil 30 ist mit Durchgangsbohrungen 34 versehen, mittels derer es mit dem zweiten Trägerteil 32 und dem Stirnrad 20 verbunden wird.

Im Ausgleichsgetriebe 120 sind drei Paare von Planetenrädern 50, 52 vorgesehen, wobei ein erstes Planetenrad 50 mit der ersten Verzahnung 41 des ersten Differenzgliedes 40 und die Planetenräder 52 eines zweiten Planetengetriebes mit der zweiten Verzahnung 43 des zweiten Differenzgliedes 42 in Verbindung stehen.

Wie bereits im Zusammenhang mit Figur 2 ausgeführt wurde, erfolgt erfindungsgemäß die Lagerung der Planetenbolzen 70 außen im ersten Trägerelement 30 und innen im Stirnrad 20. So können, obwohl das Ausgleichsgetriebe 120 relativ zum Stirnrad 20 gesehen außermittig angeordnet ist, große Momente übertragen werden. Der Kraftfluss geht hier einen stabilen Weg über das Stirnrad 20 weiter zu den Planetenbolzen 70 und zu den Planetenrädern 50, 52.

Die Montage des Ausgleichsgetriebes 120 kann dabei entweder in dem ersten Trägerelement 30 erfolgen, wobei die gesamte Anordnung dann an das Stirnrad 20 angeflanscht wird, die Montage kann aber auch direkt an dem Stirnrad 20 vorgenommen werden, wobei das erste Trägerelement 30 dann deckelartig über das Stirnrad 20 und die Planetenräder 50, 52 übergestülpt und an dem Stirnrad 20 angeflanscht wird.

Um mehr Stabilität zu erhalten, kann die Kontur des ersten Trägerelements 30 wellig und konisch ausgeformt sein.

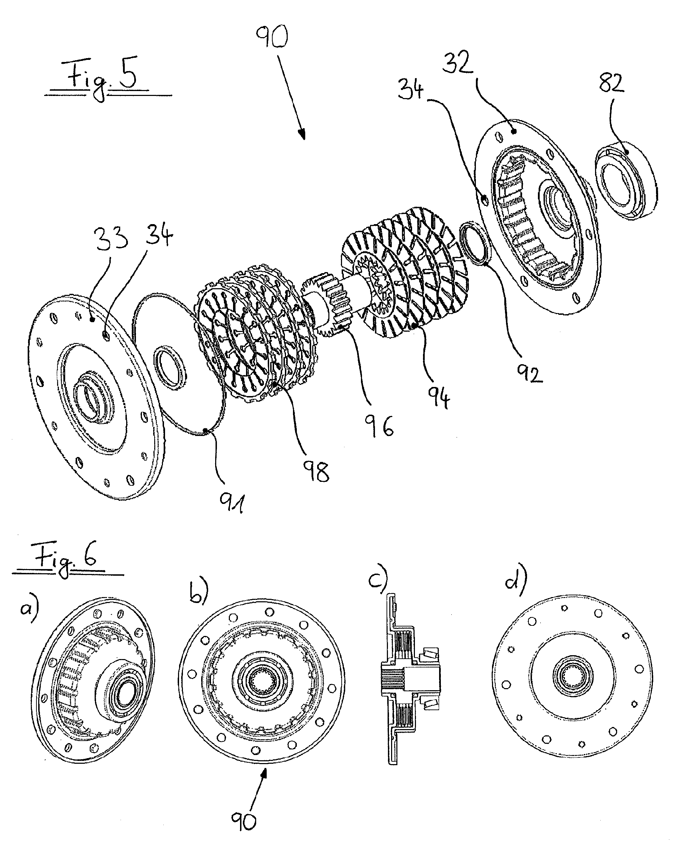

Die Figuren 5 und 6 zeigen den Aufbau der Visco-Kupplung 90, die in dem Folgenden figurenübergreifend beschrieben wird.

Die Visco-Kupplung 90 ist in dem zweiten Trägerteil 32 angeordnet, das gleichzeitig als Träger der Außenlamellen 98 dient. Auch in dem zweiten Trägerelement 32 sind Durchgangsbohrungen 34 vorgesehen, durch die das zweite Trägerelement 32 mit dem Stirnrad 20 verbunden wird. Das zweite Trägerelement 32 ist mittels eines Radiallagers 82 gelagert.

Die Konstruktion des zweiten Trägerteils 32 ist durch Stanzumformtechnologie gefertigt. Die so geschaffene Teilegeometrie dient der Bauteilversteifung und der Aufnahme der Außenlamellen 98 und somit der Drehmomentaufnahme.

Von den Außenlamellen 98 wird das auszugleichende Drehmoment auf Innenlamellen 94 übertragen, die in Eingriff mit einer Welle 96 der Visco-Kupplung 90 stehen. Auch die Welle 96 weist eine Innenverzahnung auf, über die sie ebenso wie das zweite Differenzglied 42 mit einer entsprechenden Antriebswelle (nicht dargestellt) in Steckverbindung steht.

Die Visco-Kupplung 90 wird zusammen mit dem zweiten Trägerteil 32 von einem Deckel 33 verschlossen, wobei die Kontaktstellen am zweiten Trägerteil 32, dem Deckel 33 und der Welle 96 mit entsprechenden Dichtungsbaugruppen 91, 92 abgedichtet sind. Somit stellt die gesamte Visco-Kupplung 90 eine separate, für sich funktionsfähige Baugruppe dar, die einzeln gefertigt und geliefert werden kann und dann durch Durchgangsbohrungen 34 an das Stirnrad 20 angeflanscht wird.

Durch die Kombination der selbstsperrenden Visco-Kupplung 90 mit dem offenen Ausgleichsgetriebe 120 wird insgesamt ein Differentialgetriebe 100 bereitgestellt, das sich zum einen durch seinen modularen Aufbau auszeichnet und zum anderen dazu in der Lage ist, über einen Drehzahlunterschied zwischen dem ersten 40 und dem zweiten Differenzglied 42 die Drehmomentübertragung ausgleichen zu können.

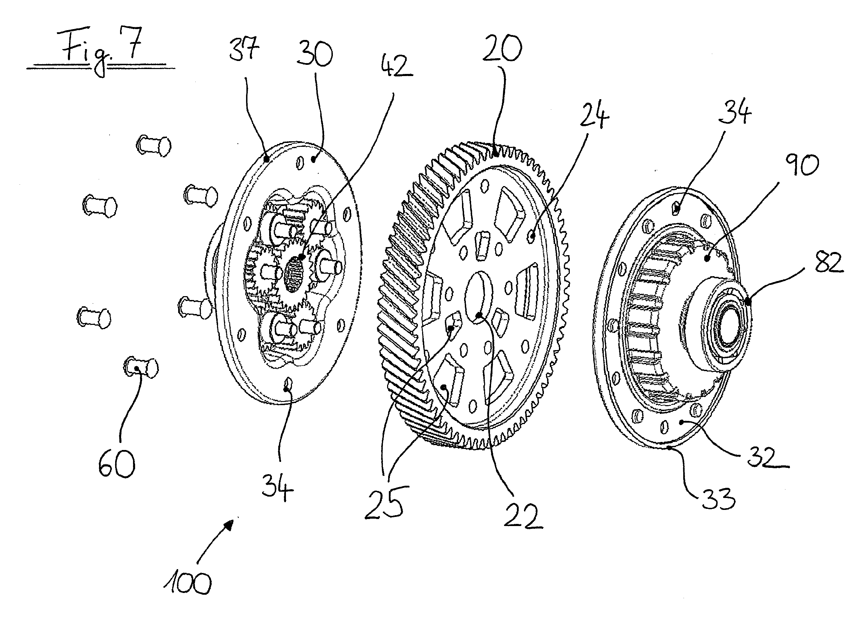

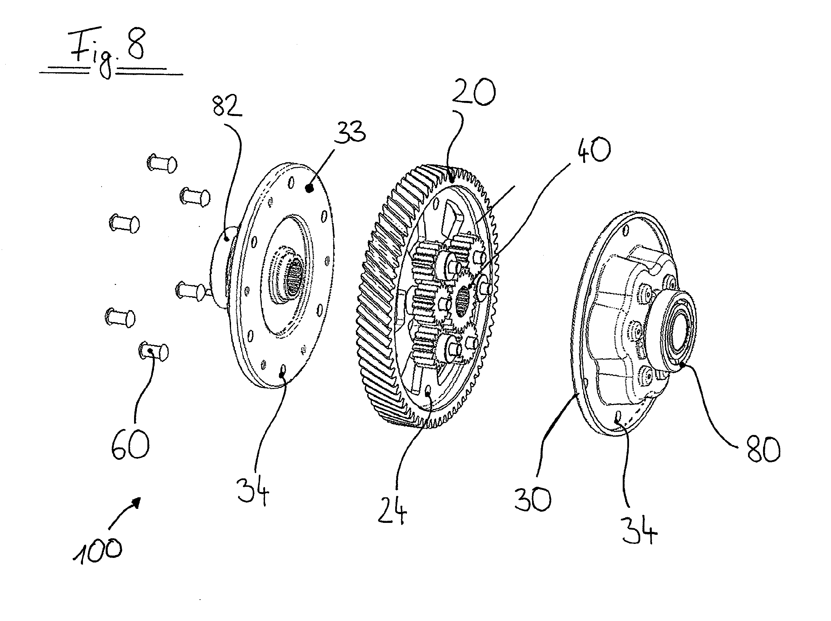

Der modulare Gesamtaufbau des erfindungsgemäßen Differentialgetriebes 100 wird in den Figuren 7 und 8 deutlich, wobei die Figur 7 eine erste Ausführungsform zeigt, bei der das Ausgleichsgetriebe 120 in dem ersten Trägerteil 30 vormontiert ist und Figur 8 eine zweite Ausführungsform , bei der das Ausgleichsgetriebe 120 auf dem Stirnrad 20 vormontiert ist.

Unabhängig davon auf welche Art die Vormontage des Differentialgetriebes 100 erfolgt, ist eine Vorfertigung des Differentialgetriebes 100 in allen Modulen möglich, die dann separat zu einer Fertigungslinie geliefert werden können und muss dort zum fertigen Differentialgetriebe 100 montiert werden.

Die Module werden dann durch Befestigungselemente 60, bspw. Schrauben oder Bolzen, die durch die Durchgangsbohrungen 24 am Stirnrad 20 und Durchgangsbohrungen 34 auf dem ersten Trägerteil 30 und dem zweiten Trägerteil 32 geführt werden, zusammengefügt.

Ein Verschweißen der Module ist grundsätzlich nicht vorgesehen. Das Schließen der Visco-Kupplung kann mittels Toxen und einem gemeinsamen Umlegen der Borde 37 kostengünstig, stabil, dicht und ohne Einfluss von Wärme realisiert werden.

So wird insbesondere ein einfacher Aufbau des Stirnrads 20 und des ersten Trägerelements 30 ermöglicht.

Insofern die Festigkeitsauslegung des Stirnrads 20 dies ermöglicht, können zudem Masseaussparungen 25 in das an sich massiv gefertigte Stirnrad 20 eingebracht werden, um das Gewicht des Stirnrads 20 soweit wie möglich zu verringern.

In eine zentrale Aussparung 22 des Stirnrads 20 erstreckt sich die Welle 96 der Visco-Kupplung 90, so dass diese Welle beidseitig gelagert ist. Die Welle 96 ist also innerhalb der Aussparung 22 mit dem zweiten Differenzglied 42 steckverbunden.

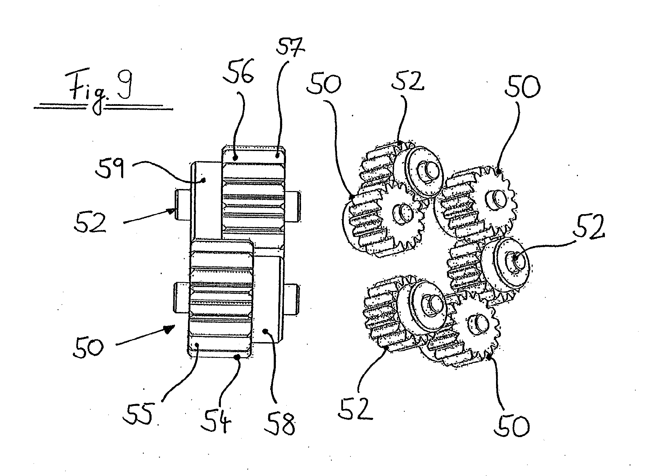

Figur 9 zeigt ergänzend in vergrößerter Ansicht der Planetenräder 50, 52, um zu verdeutlichen, wie die axiale Positionierung der Planetenräder 50, 52 zwischen dem Stirnrad 20 auf der einen und dem ersten Trägerteil 30 auf der anderen Seite gewährleistet ist.

Jedes Planetenrad 50, 52 weist demgemäß längs seiner axialen Erstreckung drei Abschnitte auf. Dies sind jeweils ein erster äußerer Teilabschnitt 55, 57, ein mittlerer Teilabschnitt 54, 56 und ein nicht verzahnter Abschnitt 58, 59.

Die ersten Planetenräder 50 stehen somit über ihre äußeren Teilabschnitte 55 mit der ersten Verzahnung 41 des ersten Dififerenzglieds 40 in Verbindung. Die zweiten Planetenräder 52 stehen entsprechend mit ihren äußeren Teilabschnitten 57 mit der zweiten Verzahnung 43 des zweiten Dififerenzglieds in Verbindung.

Miteinander stehen die Planetenräder 50, 52 über die mittleren Abschnitte 54, 56 in Verbindung.

Damit die Planetenräder 50, 52 axial nicht verrutschen und sich evt. aus ihrer Verzahnung lösen, sind nicht verzahnte zylindrische Abschnitte 58, 59 vorgesehen, die einen solchen Außendurchmesser aufweisen, dass sie den kämmenden Eingriff der jeweiligen verzahnten Abschnitte nicht stören. Die nicht verzahnten Abschnitte 58, 59 liegen jedoch axial an dem Stirnrad 20 bzw. an dem ersten Trägerteil 30 an, so dass ein axiales Verrutschen der Zahnräder 50, 52 nicht möglich ist.

### Bezugszeichenliste

- 10: Summenwelle
- 20: Stirnrad
- 22: Aussparung
- 24: Durchgangsbohrung
- 25: Masseaussparung
- 30: erstes Trägerteil
- 31: topfförmiger Abschnitt
- 32: zweites Trägerteil
- 33: topfförmiger Abschnitt
- 34: Durchgangsbohrung
- 36: Deckelelement
- 37: Borde
- 40: erstes Differenzglied
- 41: erste Zahnung
- 42: zweites Differenzglied
- 43: zweite Zahnung
- 50: erstes Planetenrad
- 52: zweites Planetenrad
- 54: mittlerer Teilabschnitt
- 55: erster äußerer Teilabschnitt
- 56: mittlerer Teilabschnitt
- 57: zweiter äußerer Teilabschnitt
- 58: erster, nicht verzahnter Abschnitt
- 59: zweiter, nicht verzahnter Abschnitt
- 60: Befestigungselement
- 70: Planetenbolzen
- 80: erstes Lager
- 82: zweites Lager
- 90: Visco-Kupplung
- 91: Dichtung
- 92: Dichtung
- 94: innenverzahnte Lamellen
- 96: Welle der Visco-Kupplung
- 98: außenverzahnte Lamellen
- 100: Differentialgetriebe
- 120: Ausgleichsgetriebe

## Patentansprüche

1. Differentialgetriebe (100) mit einer Summenwelle (10) für die Verteilung von Drehmomenten an ein erstes Differenzglied (40) sowie an ein zweites Differenzglied (42) über mindestens ein aus jeweils einem ersten Planetenrad (50) und einem zweiten Planetenrad (52) gebildetes Paar, wobei die Planetenräder (50, 52) eines Paares sich so einander gegenüberliegen und wirkverbunden sind,
- dass axial mittlere Teilabschnitte (54, 56) der verzahnten Abschnitte beider Planetenräder (50, 52) miteinander verzahnt sind,
- dass jeder der mittleren Teilabschnitte (54, 56) jeweils axial neben einem verzahnten äußeren Teilabschnitt (55, 57) des jeweiligen Planetenrads (50, 52) ausgebildet ist, und
- dass der äußere Teilabschnitt (55) des ersten Planetenrades (50) im Zahneingriff mit einer ersten Verzahnung (41) an dem ersten Differenzglied (40) und der äußeren Teilabschnitt (57) des zweiten Planetenrades (52) im Zahneingriff mit einer zweiten Verzahnung (43) an dem zweiten Differenzglied (42) steht, die Summenwelle (10) ein Stirnrad (20) und ein erstes (30) Trägerteil umfasst, wobei die Planetenräder (50, 52) in dem ersten Trägerteil (30) und in dem Stirnrad (20) gelagert sind, ***dadurch gekennzeichnet, dass** das zweite Differenzglied (42) mit einer Visco-Kupplung (90) gekoppelt ist und dass die Visco-Kupplung (90) **an** einer den Planetenrädern (50, 52) abgewandten Seite des Stirnrads (29) angeordnet ist.*

2. Differentialgetriebe (100) nach Anspruch 1, **dadurch gekennzeichnet, dass** das erste Trägerteil (30) ein kaltumgeformtes, an das Stirnrad (20) angeflanschtes Blechteil ist.

3. Differentialgetriebe (100) nach Anspruch 1 oder 2, **dadurch gekennzeichnet, dass** das zweite Differenzglied (42) sich in eine zentrale Aussparung (22) in dem Stirnrad (20) erstreckt.

4. Differentialgetriebe (100) nach Anspruch 1, **dadurch gekennzeichnet, dass** die Visco-Kupplung (90) in einem zweiten Trägerteil gelagert ist.

5. Differentialgetriebe (100) nach Anspruch 4, **dadurch gekennzeichnet, dass** ein Deckel (33) die Visco-Kupplung (90) in dem zweiten Trägerteil einschließt und der Deckel (33) zusammen mit dem zweiten Trägerteil (32) an das Stirnrad (20) geflanscht ist.

6. Differentialgetriebe (100) nach Anspruch 5, **dadurch gekennzeichnet, dass das** zweite Trägerteil (32) und/oder der Deckel (33) als kaltumgeformtes Blechteil hergestellt ist.

7. Differentialgetriebe (100) *nach Anspruch 6*, **dadurch gekennzeichnet, dass** das Stirnrad (20) und das erste (30) und das zweite (32) Trägerteil und der Deckel (33) jeweils einer Anzahl rotationssymmetrisch angeordneter Durchgangsbohrungen (24, 34) aufweisen, durch die Befestigungselemente (60) zum Verbinden des Stirnrads (20) mit dem ersten (30) und dem zweiten (32) Trägerteil und dem Deckel (33) geführt sind.

8. Differentialgetriebe (100) nach einem der Ansprüche 1 bis 12, **dadurch gekennzeichnet, dass** die Planetenräder (30, 32) identisch zueinander ausgebil**det** sind.

9. Differentialgetriebe (100) nach einem der Ansprüche 1 bis 13, **dadurch gekennzeichnet, dass** die Trägerteile (30, 32) und der Deckel (33) als Zieh-Präge-Teile hergestellt sind.
